# EUROPÄISCHE PATENTSCHRIFT

(11) **EP 1 582 425 B1**
(45) Veröffentlichungstag und Bekanntmachung des Hinweises auf die Patenterteilung: **11.01.2006**
(21) Anmeldenummer: 04008014.5
(22) Anmeldetag: 01.04.2004
(51) Int. Cl.: B60S 1/34

(54) **Verfahren zum Wischen einer Scheibe eines Kraftahrzeugs und Scheibenwischvorrichtung**
Method of wiping a windshield of a vehicle and windshield wiping device
Méthode pour essuyer le pare-brise d'un véhicule et dispositif pour celle-ci

(43) Veröffentlichungstag der Anmeldung: 05.10.2005
(73) Patentinhaber: Delphi Technologies, Inc., Troy, MI 48007 (US)
(72) Erfinder: Altrogge, Rainer, 50997 Köln (DE)
(74) Vertreter: Manitz, Finsterwald & Partner GbR

(56) Entgegenhaltungen:
- DE-A- 1 480 726
- DE-B- 1 246 442

## Beschreibung

Die vorliegende Erfindung betrifft ein Verfahren zum Wischen einer Scheibe eines Kraftfahrzeugs sowie eine entsprechende Scheibenwischvorrichtung zum Wischen einer Scheibe eines Kraftfahrzeugs.

Scheibenwischvorrichtungen für Kraftfahrzeuge sind grundsätzlich bekannt. Sie dienen dazu, von Scheiben eines Kraftfahrzeugs Wasser und Verunreinigungen zu entfernen und weisen dazu häufig einen oder mehrere Wischerarme mit daran gehaltenen Wischblättern sowie einen Antrieb zur Bewegung der Wischerarme zwischen zwei Endlagen auf. Bei der Bewegung der Wischerarme zwischen den beiden Endlagen ergibt sich häufig das Problem, dass bei einer Bewegung der Wischerblätter von einer Endlage in die andere Endlage Wasser zwar im Wesentlichen streifenfrei bzw. vollständig von der Scheibe entfernt werden kann, dass jedoch bei Bewegung in der umgekehrten Richtung Streifen bzw. Wasserbeläge auf der Scheibe zurückbleiben, die die Sicht für den Fahrer beeinträchtigen können.

Die DE 14 80 726 A offenbart ein Verfahren zum selbsttätigen Scheibenwischen für eine Scheibe eines Kraftfahrzeugs nach dem Oberbegriff des Anspruchs 1 sowie eine Vorrichtung zum Wischen einer Scheibe eines Kraftfahrzeugs nach dem Oberbegriff des Anspruchs 6.

Der vorliegenden Erfindung liegt die Aufgabe zugrunde, ein Verfahren zum Wischen einer Scheibe eines Kraftfahrzeugs bereitzustellen, das bei hohen Geschwindigkeiten ein Wischen der Scheibe im Wesentlichen ohne die Bildung von Streifen ermöglicht, sowie eine entsprechende Scheibenwischvorrichtung zum Wischen einer Scheibe eines Kraftfahrzeugs zu schaffen.

Die Aufgabe wird gelöst durch ein Verfahren zum Wischen einer Scheibe eines Kraftfahrzeugs mit den Merkmalen des Anspruchs 1.

Bei dem erfindungsgemäßen Verfahren zum Wischen einer Scheibe eines Kraftfahrzeugs wird wenigstens ein Wischblatt zwischen einer ersten und einer zweiten Endlage hin- und herbewegt, wobei eine Wischlippe des Wischblatts während der Bewegung von der ersten in die zweite Endlage kontinuierlich auf der Scheibe aufliegt, während der gesamten Bewegung in der umgekehrten Richtung jedoch nicht.

Die Geschwindigkeit des Kraftfahrzeugs wird erfasst und während des Wischens wird die Wischlippe nur dann von der Scheibe entfernt, wenn die Geschwindigkeit in einem vorgegebenen Intervall liegt.

Die Aufgabe wird weiterhin gelöst durch eine Scheibenwischvorrichtung mit den Merkmalen des Anspruchs 6.

Die erfindungsgemäße Scheibenwischvorrichtung zum Wischen einer Scheibe eines Kraftfahrzeugs umfasst wenigstens einen zwischen einer ersten und einer zweiten Wischerarmendlage durch einen Antrieb hin- und herbewegbaren Wischerarm zur Halterung eines Wischblatts und eine Wischblattstelleinrichtung, mittels derer der Wischerarm und/oder das Wischblatt zwischen zwei Stellungen hin- und herbewegbar ist, so dass die Wischlippe des Wischblatts in einer ersten Stellung während einer Bewegung von der ersten in die zweite Wischerarmendlage auf der Scheibe aufliegt, in der zweiten Stellung während der gesamten Bewegung in der umgekehrten Richtung jedoch nicht.

Zudem weist die erfindungsgemäße Scheibenwischervorrichtung eine Steuereinrichtung zur Steuerung der Wischblatteinstelleinrichtung auf, der ein eine Geschwindigkeit des Kraftfahrzeugs wiedergebendes Signal zuführbar ist, und mittels derer die Wischblattverstelleinrichtung so ansteuerbar ist, dass während des Wischens ein Entfernen der Wischlippe von der Scheibe nur dann erfolgt, wenn die Geschwindigkeit in einem vorgegebenen Intervall liegt.

Die Endlagen des Wischblatts ergeben sich dabei aus den Wischerarmendlagen und der Geometrie des Wischerarms.

Da die Wischlippe somit nur bei der Bewegung von der ersten in die zweite Endlage auf der Scheibe aufliegt, bei der gesamten Bewegung in der anderen Richtung jedoch nicht, kann durch entsprechende Wahl der Endlagen die Bildung von Streifen oder Wasserbelägen vermieden werden.

Weiterbildungen und bevorzugte Ausführungsformen der Erfindung sind in den Ansprüchen, der Beschreibung und den Zeichnungen beschrieben.

Um ein möglichst streifenfreies Wischen der Scheibe zu erzielen, ist es bei dem erfindungsgemäßen Verfahren bzw. bei der erfindungsgemäßen Scheibenwischvorrichtung bevorzugt, dass die erste und die zweite Endlage bzw. Wischerarmendlage so gewählt sind, dass bei einer Vorwärtsfahrt des Kraftfahrzeugs und auf wenigstens der Hälfte der Bewegungsbahn des Wischblatts die Bewegung der auf der Scheibe aufliegenden Wischlippe eine in Richtung des Fahrtwindes verlaufende Komponente aufweist. Auf diese Weise kann vermieden werden, dass Wischwasser durch den Fahrtwind zwischen die Wischlippe und die Scheibe gepresst wird, was zu einer Streifen- bzw. Wasserbelagsbildung führen könnte.

Die Wischlippe kann auf unterschiedliche Art und Weise mit der Scheibe in Kontakt gebracht bzw. von dieser entfernt werden. Bei einer Ausführungsform des erfindungsgemäßen Verfahrens ist es bevorzugt, dass das Wischblatt um eine zu einer Längsachse des Wischblatts im Wesentlichen parallel ausgerichteten Achse gedreht oder geschwenkt wird, um die Wischlippe in Kontakt mit der Scheibe zu bringen oder um diese von der Scheibe wegzubewegen. Bei der erfindungsgemäßen Scheibenwischvorrichtung ist es dazu bevorzugt, dass die Wischblattstelleinrichtung eine Dreh- oder Schwenkeinrichtung umfasst, mittels derer der Wischerarm und/oder das Wischblatt um eine zu einer Längsachse des Wischblatts im Wesentlichen parallel ausgerichtete Achse dreh- oder schwenkbar ist, um die Wischlippe in Kontakt mit der Scheibe zu bringen oder um diese von der Scheibe wegzubewegen. Die Achse, um die das Wischblatt gedreht oder geschwenkt wird, kann je nach Aufbau des Wischblatts gegenüber der Längsachse des Wischblatts um wenige Grad geneigt sein, verläuft jedoch vorzugsweise parallel dazu. Bei dieser Ausführungsform wirken auf den Wischerarm und dessen Lager nur besonders geringe Kräfte. Die Drehung bzw. Schwenkung des Wischarms und/oder des Wischblatts kann dabei über ein entsprechendes Getriebe und den Antrieb zur Bewegung des Wischerarms erfolgen. Es ist jedoch auch denkbar, für die Dreh- oder Schwenkbewegung des Wischarms und/oder des Wischblatts einen entsprechenden elektrischen Antrieb vorzusehen. Das Wischblatt oder der Wischarm können weiterhin Abstandshalter, beispielsweise Rädchen, aufweisen, um den Wischarm und das Wischblatt von der Scheibe beabstandet zu halten, wenn die Wischlippe nicht auf der Scheibe aufliegt.

Zusätzlich oder alternativ ist es bevorzugt, dass das Wischblatt relativ zu der Oberfläche der Scheibe abgesenkt oder angehoben wird, um die Wischlippe in Kontakt mit der Scheibe zu bringen bzw. diese von der Scheibe abzuheben. Hierzu ist es bei der erfindungsgemäßen Scheibenwischvorrichtung bevorzugt, dass die Wischblattstelleinrichtung so ausgebildet ist, dass der Wischerarm relativ zu der Oberfläche der Scheibe absenk- oder anhebbar ist, um die Wischlippe in Kontakt mit der Scheibe zu bringen bzw. diese von der Scheibe abzuheben. Diese Variante des Verfahrens erlaubt eine besonders einfache Ausbildung der Wischblattstelleinrichtung.

So ist es bei einer Ausführungsform der erfindungsgemäßen Scheibenwischvorrichtung besonders bevorzugt, dass die Wischblattstelleinrichtung Flächen umfasst, mittels derer durch aerodynamische Effekte von Fahrtwind der Wischerarm von der Oberfläche der Scheibe weg anhebbar ist. In diesem Fall sind keine zusätzlichen mechanischen Antriebsmittel notwendig. Darüber hinaus kann auf diese Weise auch allein mit mechanischen Mitteln erreicht werden, dass ein Abheben des Wischerarms nur bei entsprechend hohen Geschwindigkeiten des Kraftfahrzeugs erfolgt.

Alternativ oder zusätzlich ist es bevorzugt, dass die Wischblattstelleinrichtung einen an dem Wischerarm parallel zu der Bewegungsrichtung des Wischblatts zwischen zwei Läuferendlagen schwenkbar gehaltenen, auf der Scheibe oder einer Führung laufenden Läufer umfasst, und dass der Wischerarm und/oder der Läufer so ausgebildet sind, dass die Wischlippe auf der Scheibe aufliegt, wenn der Läufer die eine Läuferendlage einnimmt, und die Scheibe nicht berührt, wenn der Läufer die andere Läuferendlage einnimmt. Dies kann insbesondere dadurch erreicht werden, dass der Läufer in den Läuferendlagen jeweils einen unterschiedlichen Schwenkwinkel gegenüber einer Normalen auf die Scheibe aufweist. Die Läuferendlagen können insbesondere durch einfache, in den Wischerarm integrierte Anschläge gegeben sein. Vorzugsweise weist die Führung in diesem Fall an den Läuferendlagen entsprechenden Abschnitten Einrichtungen auf, in denen der Läufer bei Bewegungsumkehr vorübergehend festgehalten wird, so dass der Läufer von einer Läuferendlage in die andere Läuferendlage gebracht wird.

Zusätzlich oder alternativ ist es besonders bevorzugt, dass der Wischerarm mittels eines mit einem Antrieb der Scheibenwischvorrichtung und dem Wischerarm verbundenen Koppelgetriebe anheb- oder absenkbar ist. Beispielsweise kann das Koppelgetriebe eine entsprechende Welle oder Scheibe mit einem Nocken aufweisen, mittels dessen der Wischerarm anhebbar ist.

Vorzugsweise umfasst die Wischblattstelleinrichtung einen elektrischen Antrieb, mittels dessen der Wischerarm und/oder das Wischblatt verstellbar ist.

Das vorgegebene Intervall für Geschwindigkeiten, innerhalb dessen die Wischlippe von der Scheibe entfernt wird, kann so gewählt sein, dass das Entfernen der Wischlippe von der Scheibe nur bei hohen Geschwindigkeiten erfolgt.

Grundsätzlich kann der Wischerarm in beliebiger Art und Weise zwischen den Endlagen hin- und herbewegt werden. Es ist jedoch bevorzugt, dass das Wischblatt zwischen den Endlagen hin- und hergeschwenkt wird. Bei der Scheibenwischvorrichtung ist es dazu bevorzugt, dass der Wischarm zwischen seinen Wischerarmendlagen hin- und herschwenkbar ist. Auf diese Weise kann mit möglichst geringem mechanischen Aufwand eine große Fläche auf einer Scheibe gewischt werden.

Die Erfindung wird im Folgenden noch weiter beispielhaft anhand der Zeichnungen erläutert. Es zeigen:
- Fig. 1: einen Abschnitt aus einer Scheibe eines Kraftfahrzeugs mit Teilen einer Scheibenwischvorrichtung nach einer ersten bevorzugten Ausführungsform der Erfindung,

- Fig. 2: eine Schnittansicht entlang der Linie A-A in Fig. 1 bei Bewegung des Wischblatts von einer ersten Endlage in die zweite Endlage,
- Fig. 3: die gleiche Ansicht wie in Fig. 2, jedoch bei Bewegung des Wischblatts von der zweiten Endlage in die erste Endlage, und
- Fig. 4: einen Abschnitt aus einer Scheibe eines Kraftfahrzeugs mit Teilen Scheibenwischvorrichtung nach einer zweiten bevorzugten Ausführungsform der Erfindung.

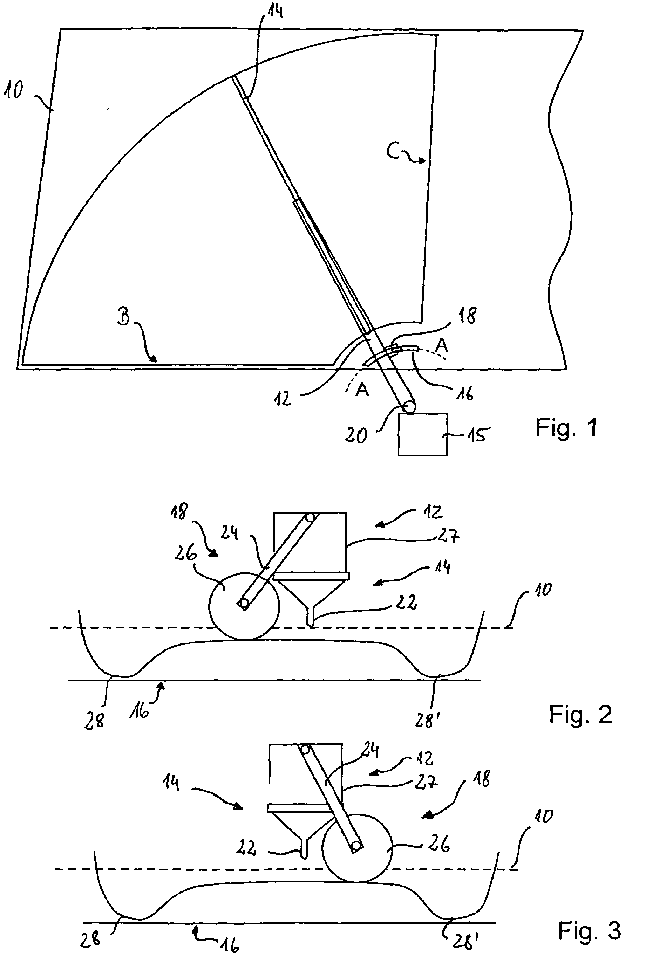

In Fig. 1 ist teilweise eine Scheibe 10 eines Kraftfahrzeugs und ein Scheibenwischvorrichtung zum Wischen der Scheibe 10 nach einer ersten bevorzugten Ausführungsform der Erfindung gezeigt.

Die Scheibenwischvorrichtung umfasst zwei gleich ausgebildete, synchron bewegte Wischerarme mit daran gehaltenen Wischblättern, von denen in Fig. 1 nur der Wischerarm 12 mit einem daran gehaltenen Wischerblatt 14 gezeigt ist, und einen in Fig. 1 nur sehr schematisch gezeigten Antrieb 15, mittels dessen die Wischarme zwischen jeweiligen Wischarmendlagen und dementsprechend die Wischblätter zwischen entsprechenden Endlagen hin- und herschwenkbar sind. In Fig. 1 sind nur die erste Endlage B und die zweite Endlage C des Wischblatts 14 gezeigt. Die Scheibenwischvorrichtung umfasst weiterhin eine Führung 16 für einen an dem Wischerarm 12 gehaltenen Läufer 18.

Der Antrieb 15 treibt die Wischerarme über Antriebswellen an, von denen in Fig. 1 nur die Antriebswelle 20 gezeigt ist.

Die Wischerarme sind in an sich bekannter Weise an den Antriebswellen in einer entsprechenden Ebene durch die jeweilige Längsachse der Antriebswelle 16 schwenkbar gelagert und werden durch in Fig. 1 nicht gezeigte elastische Elemente in Richtung der Scheibe 10 gedrückt.

Die Wischblätter sind in an sich bekannter Weise an den Wischerarmen schwenkbar gehalten, wobei der Schwenkbereich jedoch so eingeschränkt ist, dass sie bei Abheben der Wischerarme während des Wischens nicht mit ihren Enden auf die Scheibe kippen können.

Während die Wischblätter konventionell aufgebaut sind und jeweils eine Wischlippe, in Fig. 2 und 3 die Wischlippe 22, aufweist, sind die Wischerarme gegenüber konventionellen Wischerarmen in zweifacher Hinsicht geändert. Da die Wischerarme gleich aufgebaut sind, genügt es, die Unterschiede nur am Beispiel des Wischerarms 12 zu erläutern.

Zum einen ist an dem Wischerarm 12 der Läufer 18 gehalten, der um eine parallel zu einer Längsachse des Wischerarms 12 und damit des Wischblatts 14 verlaufende Achse schwenkbar ist.

Der Läufer besitzt einen an dem Wischerarm 12 schwenkbar gehaltenen, U-förmigen Halter 24, zwischen dessen freien Enden ein Läuferrad 26 drehbar gelagert ist. Das Läuferrad 26 bewegt sich in der nutenartigen Führung 16.

Zum anderen weist der Wischerarm 12 im Bereich des Läufers 18 ein asymmetrisches U-förmiges Profil 27 auf, das Schwenkbewegungen des Läufers 18 mit den jeweils freien Schenkeln zwischen zwei Läuferendlagen begrenzt. Durch die asymmetrische Ausbildung wird erreicht, dass der Läufer 18 bei Schwenkung in den beiden möglichen Schwenkrichtungen unterschiedlich große maximale Schwenkwinkel gegenüber einer Normalen auf die Scheibe 10 erreichen kann. Beispielsweise ist in den Fig. 2 und 3 der Läufer 18 nach links mit einem größeren Winkel zur Seite schwenkbar als nach rechts, da er jeweils an den freien Enden des asymmetrischen U-förmigen Profils 27 anschlägt.

Die Führung 16 ist als kreissegmentförmige Nut ausgebildet, die im Längsschnitt genauer in den Fig. 2 und 3 gezeigt ist. Jeweils an den Enden der Führung 16 sind Vertiefungen 28, 28' vorgesehen, in die das Läuferrad 26 kurzzeitig einrastet, wenn der Wischerarm 12 die entsprechenden Wischerarmendlagen bzw. das Wischblatt 14 die entsprechenden Endlagen B bzw. C erreicht hat.

Das asymmetrische, U-förmige Profil 27 des Wischerarms 12 im Bereich des Läufers 18, die Länge der freien Schenkel des U-förmigen Halters 24, der Durchmesser des Läuferrades 16 und der Abstand des Wischerarms 12 von der Führung 16 sind so gewählt, dass bei einer Bewegung des Wischblatts 14 von der Endlage B in die Endlage C bzw. einer entsprechenden Bewegung des Wischerarms 14 das Läuferrad 26 nur von dem Eigengewicht des Läufers 18 auf die Führung 16 gedrückt wird, so dass das Wischblatt 14 mit dem normalen Anpressdruck mit seiner Wischlippe 22 auf der Scheibe 10 aufliegt. Bei Erreichen der Endlage C bleibt das Läuferrad 26 in der rechten Vertiefung 28' der Führung 16 hängen, so dass es nach Bewegung des Wischblatts 14 aus der zweiten Endlage C in Richtung der ersten Endlage B umschlägt, dabei an den entsprechenden Abschnitt des U-förmigen Profils 27 des Wischerarms 12 anschlägt, die zweite Läuferendlage einnimmt und so den Wischerarm 12 mit dem Wischblatt 14 soweit anhebt, dass die Wischlippe 22 des Wischblatts 14 dabei von der Scheibe 10 abgehoben wird (vgl. Fig. 3).

Das asymmetrische U-förmige Profil 27, der Läufer 18 und die Führung 16 bilden daher eine Wischblattstelleinrichtung im Sinne der vorliegenden Erfindung.

Durch die Wahl der ersten und der zweiten Endlage für das Wischblatt 14 weist bei einer Vorwärtsfahrt des Kraftfahrzeugs die Bewegung der auf der Scheibe 10 aufliegenden Wischlippe 22 über die gesamte Bewegungsbahn eine in Richtung des Fahrtwindes verlaufende Komponente auf.

Bei einer Bewegung des Wischblatts 14 von der Endlage B in die Endlage C liegt also die Wischlippe 22 auf der Scheibe 10 auf, bei der Bewegung in der umgekehrten Richtung jedoch nicht, der der Wischerarm 12 angehoben und damit das Wischblatt 14 mit der Wischlippe 22 von der Scheibe 10 abgehoben wird.

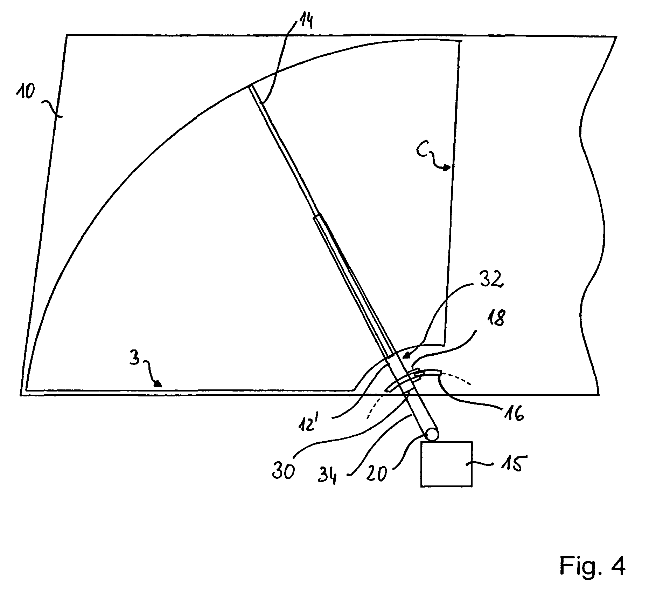

Bei einer in Fig. 4 veranschaulichten, zweiten bevorzugten Ausführungsform der Erfindung wird das Wischblatt gedreht, um die Wischlippe von der Scheibe abzuheben. Da die Scheibenwischvorrichtung sich von der Scheibenwischvorrichtung des ersten Ausführungsbeispiels nur in der Ausbildung des Wischarms unterscheidet, werden für die anderen Teile die gleichen Bezugszeichen verwendet und es gelten die gleichen Erläuterungen.

Der Wischerarm 12' weist im Unterschied zu dem vorstehend beschriebenen Wischerarm 12 in dem Abschnitt zwischen der Antriebswelle 14 und dem Läufer 18 ein Drehgelenk 30 auf, mittels dessen ein freies Ende 32 des Wischerarms 12' gegenüber dem mit der Antriebswelle 20 verbundenen Abschnitt 34 drehbar ist.

Bei einer Bewegung des Wischblatts 14 von der ersten Endlage B in die zweite Endlage C nimmt der Läufer 18 die in Fig. 2 gezeigte Läuferendlage ein, in der die Wischlippe 22 auf der Scheibe 10 aufliegt.

Bei Erreichen der zweiten Endlage C und Umkehr der Bewegung in Richtung der ersten Endlage B wird der Läufer 18 in die in Fig. 3 gezeigte Läuferendlage geklappt, wobei nun das freie Ende 32 des Wischarms 12' und damit das Wischblatt 14 in Fig. 3 gegen den Uhrzeigersinn gedreht bzw. geschwenkt wird, so dass die Wischlippe 22, nicht aber der Wischarm 12' von der Scheibe abgehoben wird.

Bei diesem Ausführungsbeispiel bilden also das Drehgelenk 30, der Läufer 18 und die Führung 16 die Wischblattstelleinrichtung, wobei der Läufer 18 und die Führung 16 eine Dreh- bzw. Schwenkeinrichtung bilden.

### Bezugszeichenliste

- 10: Scheibe
- 12, 12': Wischerarm
- 14: Wischblatt
- 15: Antrieb
- 16: Führung
- 18: Läufer
- 20: Antriebswelle
- 22: Wischlippe
- 24: Halter
- 26: Läuferrad
- 28, 28': Vertiefungen
- 30: Drehgelenk
- 32: freies Ende
- 34: Abschnitt

## Patentansprüche

1. Verfahren zum Wischen einer Scheibe (10) eines Kraftfahrzeugs, bei dem wenigstens ein Wischblatt (14) zwischen einer ersten und einer zweiten Endlage hin- und herbewegt wird,
wobei eine Wischlippe (22) des Wischblatts (14) während der Bewegung von der ersten in die zweite Endlage kontinuierlich auf der Scheibe (10) aufliegt, während der gesamten Bewegung in der umgekehrten Richtung jedoch nicht,
**dadurch gekennzeichnet,**
**dass** die Geschwindigkeit des Kraftfahrzeugs erfasst wird, und dass während des Wischens die Wischlippe (22) nur dann von der Scheibe (10) entfernt wird, wenn die Geschwindigkeit in einem vorgegebenen Intervall liegt.

2. Verfahren nach Anspruch 1,
**dadurch gekennzeichnet,**
**dass** die erste und die zweite Endlage so gewählt sind, dass bei einer Vorwärtsfahrt des Kraftfahrzeugs und auf wenigstens der Hälfte der Bewegungsbahn des Wischblatts (14) die Bewegung der auf der Scheibe (10) aufliegenden Wischlippe (22) eine in Richtung des Fahrtwindes verlaufende Komponente aufweist.

3. Verfahren nach Anspruch 1 oder 2,
**dadurch gekennzeichnet,**
**dass** das Wischblatt (14) um eine zu einer Längsachse des Wischblatts (14) im Wesentlichen parallel ausgerichtete Achse gedreht oder geschwenkt wird, um die Wischlippe (22) in Kontakt mit der Scheibe (10) zu bringen oder um diese von der Scheibe (10) wegzubewegen.

4. Verfahren nach einem der vorhergehenden Ansprüche,
**dadurch gekennzeichnet,**
**dass** das Wischblatt (14) relativ zu der Oberfläche der Scheibe (10) abgesenkt oder angehoben wird, um die Wischlippe (22) in Kontakt mit der Scheibe (10) zu bringen bzw. diese von der Scheibe (10) abzuheben.

5. Verfahren nach einem der vorhergehenden Ansprüche,
**dadurch gekennzeichnet,**
**dass** das Wischblatt (14) zwischen den Endlagen hin- und hergeschwenkt wird.

6. Scheibenwischvorrichtung zum Wischen einer Scheibe (10) eines Kraftfahrzeugs mit
wenigstens einem zwischen einer ersten und einer zweiten Wischerarmendlage durch einen Antrieb (20) hin- und herbewegbaren Wischerarm (12; 12') zur Halterung eines Wischblatts (14) und einer Wischblattstelleinrichtung (16, 18, 27; 16, 18, 27, 30), mittels derer der Wischerarm (12; 12') und/oder das Wischblatt (14) zwischen zwei Stellungen hin- und herbewegbar ist, so dass die Wischlippe (22) des Wischblatts (14) in einer ersten Stellung während einer Bewegung von der ersten in die zweite Wischerarmendlage auf der Scheibe (10) aufliegt, in der zweiten Stellung während der gesamten Bewegung in der umgekehrten Richtung jedoch nicht,
**dadurch gekennzeichnet,**
**dass** sie eine Steuereinrichtung zur Steuerung der Wischblattstelleinrichtung aufweist, der ein die Geschwindigkeit des Kraftfahrzeugs wiedergebendes Signal zuführbar ist und mittels derer die Wischblattstelleinrichtung so ansteuerbar ist, dass während des Wischens ein Entfernen der Wischlippe von der Scheibe nur dann erfolgt, wenn die Geschwindigkeit in einem vorgegebenen Intervall liegt.

7. Scheibenwischvorrichtung nach Anspruch 6,
**dadurch gekennzeichnet,**
**dass** die erste und die zweite Wischerarmendlage so gewählt sind, dass bei einer Vorwärtsfahrt des Kraftfahrzeugs und auf wenigstens der Hälfte der Bewegungsbahn des Wischblatts (14) die Bewegung der auf der Scheibe (10) aufliegenden Wischlippe (22) eine in Richtung des Fahrtwindes verlaufende Komponente aufweist.

8. Scheibenwischvorrichtung nach Anspruch 6 oder 7,
**dadurch gekennzeichnet,**
**dass** die Wischblattstelleinrichtung (16, 18, 30) eine Dreh- oder Schwenkeinrichtung (16, 18) umfasst, mittels derer der Wischerarm (12; 12') und/oder das Wischblatt (14) um eine zu einer Längsachse des Wischblatts (14) im Wesentlichen parallel ausgerichtete Achse dreh- oder schwenkbar ist, um die Wischlippe (22) in Kontakt mit der Scheibe (10) zu bringen und/oder um diese von der Scheibe (10) wegzubewegen.

9. Scheibenwischvorrichtung nach einem der Ansprüche 6 bis 8,
**dadurch gekennzeichnet,**
**dass** die Wischblattstelleinrichtung (16, 18, 27) so ausgebildet ist, dass der Wischerarm (12; 12') relativ zu der Oberfläche der Scheibe (10) absenk- oder anhebbar ist, um die Wischlippe (22) in Kontakt mit der Scheibe (10) zu bringen bzw. diese von der Scheibe (10) abzuheben.

10. Scheibenwischvorrichtung nach einem der Ansprüche 6 bis 9,
**dadurch gekennzeichnet,**
**dass** die Wischblattstelleinrichtung (16, 18, 27) einen an dem Wischerarm (12; 12') parallel zu der Bewegungsrichtung des Wischblatts (14) zwischen zwei Läuferendlagen schwenkbar gehaltenen, auf der Scheibe (10) oder einer Führung laufenden Läufer (18) umfasst, und
**dass** der Wischerarm (12; 12') und/oder der Läufer (18) so ausgebildet sind, dass die Wischlippe (22) auf der Scheibe (10) aufliegt, wenn der Läufer die eine Läuferendlage einnimmt, und die Scheibe (10) nicht berührt, wenn der Läufer die andere Läuferendlage einnimmt.

11. Scheibenwischvorrichtung nach einem der Ansprüche 6 bis 10,
**dadurch gekennzeichnet,**
**dass** der Wischerarm mittels eines mit einem Antrieb der Scheibenwischvorrichtung und dem Wischerarm verbundenen Koppelgetriebe anheb- oder absenkbar ist.

12. Scheibenwischvorrichtung nach einem der Ansprüche 6 bis 11,
**dadurch gekennzeichnet,**
**dass** der Wischerarm (12; 12') zwischen seinen Wischerarmendlagen hin- und herschwenkbar ist.

## Claims

1. A method of wiping a windshield or other glass (10) of a motor vehicle, wherein at least one wiper blade (14) is moved to and fro between a first end position and a second end position, wherein a wiping lip (22) of the wiper blade (14) lies continuously on the windshield or other glass (10) during the movement from the first end position into the second position, but not during the total movement in the opposite direction,
**characterized in that**
**that** the speed of the motor vehicle is detected; and
**in that** the wiping lip (22) is only removed from the windshield or other glass (10) during wiping, when the speed lies in a pre-determined interval

2. A method in accordance with claim 1, **characterized in that** the first end position and the second end position are selected such that, when the motor vehicle travels forward, the movement of the wiping lip (22) lying on the windshield or other glass (10) has a component extending in the direction of the headwind on at least half of the movement track of the wiper blade (14).

3. A method in accordance with claim 1 or claim 2, **characterized in that** the wiper blade (14) is rotated or pivoted about an axis aligned substantially parallel to a longitudinal axis of the wiper blade (14) in order to bring the wiping lip (22) into contact with the windshield or other glass (10) or to move it away from the windshield or other glass (10).

4. A method in accordance with any one of the preceding claims, **characterized in that** the wiper blade (14) is lowered or raised relative to the surface of the windshield or other glass (10) in order to bring the wiping lip (22) into contact with the windshield or other glass (10) or to lift it from the windshield or other glass (10).

5. A method in accordance with any one of the preceding claims, **characterized in that** the wiper blade (14) is pivoted to and fro between the end positions.

6. An apparatus for wiping a windshield or other glass for wiping a windshield or other glass (10) of a motor vehicle comprising
at least one wiper arm (12; 12') for the holding of a wiper blade (14) and movable to and fro by a drive (20) between a first wiper arm end position and a second wiper arm end position; and
a wiper blade setting device (16, 18, 27; 16, 18, 27, 30) by means of which the wiper arm (12; 12') and/or the wiper blade (14) is movable to and fro between two positions such that the wiping lip (22) of the wiper blade (14) lies on the windshield or other glass (10) in a first position during a movement from the first wiper arm end position into the second wiper arm end position, but not in the second position during the total movement in the opposite direction and such that it comprises a control device for the control of the wiper blade setting device to which a signal reflecting the speed of the motor vehicle can be supplied and by means of which the wiper blade setting device can be controlled such that a removal of the wiping lip from the windshield or other glass during wiping only takes place when the speed lies in a pre-determined interval.

7. An apparatus for wiping a windshield or other glass in accordance with claim 6, **characterized in that** the first wiper arm end position and the second wiper arm end position are selected such that, when the vehicle travels forward, the movement of the wiping lip (22) lying on the windshield or other glass (10) has a component extending in the direction of the headwind on at least half of the movement track of the wiper blade (14)

8. An apparatus for wiping a windshield or other glass in accordance with claim 6 or claim 7, **characterized in that** the wiper blade setting device (16, 18, 30) includes a rotary or pivot device (16, 18) by means of which the wiper arm (12; 12') and/ or the wiper blade (14) can be rotated or pivoted about an axis aligned substantially parallel to a longitudinal axis of the wiper blade (14) to bring the wiping lip (22) into contact with the windshield or other glass (10) or to move it away from the windshield or other glass (10).

9. An apparatus for wiping a windshield or other glass in accordance with any one of claims 6 to 8, **characterized in that** the wiper blade setting device (16, 18, 27) is made such that the wiper arm (12, 12') can be lowered or raised relative to the surface of the windshield or other glass (10) to bring the wiping lip (22) into contact with the windshield or other glass (10) or to lift it from the windshield or other glass (10).

10. An apparatus for wiping a windshield or other glass in accordance with any one of the claims 6 to 9, **characterized**
**in that** the wiper blade setting device (16, 18, 27) includes a runner (18) pivotably held between two runner end positions at the wiper arm (12; 12') parallel to the direction of movement of the wiper blade (14) and running on the windshield or other glass (10) or on a guide; and
**in that** the wiper arm (12; 12') and/or the runner (18) are made such that the wiping lip (22) lies on the windshield or other glass (10) when the runner adopts the one runner end position, and does not contact the windshield or other glass (10) when the runner adopts the other runner end position.

11. An apparatus for wiping a windshield or other glass in accordance with any one of the claims 6 to 10, **characterized in that** the wiper arm can be raised or lowered by means of a coupling transmission connected to a drive of the apparatus for wiping a windshield or other glass and to the wiper arm.

12. An apparatus for wiping a windshield or other glass in accordance with any one of the claims 6 to 11, **characterized in that** the wiper arm (12; 12') is pivotable to and fro between its wiper arm end positions.

## Revendications

1. Procédé pour essuyer une vitre (10) d'un véhicule automobile, dans lequel au moins une raclette d'essuie-glace (14) est déplacée en va-et-vient entre une première position d'extrémité et une seconde position d'extrémité,
dans lequel une lèvre d'essuie-glace (22) de la raclette d'essuie-glace (14) s'applique continûment sur la vitre pendant le déplacement faisant passer de la première position d'extrémité à la seconde position d'extrémité, mais ne l'est pas pendant l'ensemble du déplacement dans la direction inverse,
**caractérisé en ce**
**que** la vitesse du véhicule automobile est détectée et que, pendant l'essuyage, la lèvre d'essuyage (22) est écartée de la vitre (10) uniquement lorsque la vitesse est située dans un intervalle prédéterminé.

2. Procédé selon la revendication 1, **caractérisé en ce que** la première position d'extrémité et la seconde position d'extrémité sont choisies de telle sorte que dans le cas d'un déplacement en avant du véhicule automobile et sur au moins la moitié de la trajectoire de déplacement du balai d'essuie-glace (14), le déplacement de la lèvre d'essuyage (22) en appui sur la vitre (10) possède une composante qui s'étend dans la direction du vent de déplacement.

3. Procédé selon la revendication 1 ou 2, **caractérisé en ce que** la raclette d'essuie-glace (14) tourne ou pivote autour d'un axe qui est orienté essentiellement parallèlement à l'axe longitudinal de la raclette d'essuie-glace (14) de manière à placer la lèvre d'essuyage (22) en contact avec la vitre (10) ou pour écarter cette lèvre d'essuyage de la vitre (10).

4. Procédé selon les revendications précédentes, **caractérisé en ce que** la raclette d'essuie-glace (14) est abaissée ou soulevée par rapport à la surface de la vitre (10) pour placer la lèvre d'essuyage (22) en contact avec la vitre (10) ou écarter cette lèvre d'essuyage de la vitre (10).

5. Procédé selon les revendications précédentes, **caractérisé en ce que** la raclette d'essuie-glace (14) pivote en va-et-vient entre les positions d'extrémité.

6. Dispositif d'essuie-glace de vitre pour essuyer une vitre (10) d'un véhicule automobile, comportant au moins un bras d'essuie-glace (12; 12') qui peut être déplacé en va-et-vient entre une première position d'extrémité et une seconde position d'extrémité du bras d'essuie-glace par un dispositif d'entraînement (20), pour le maintien de la raclette d'essuie-glace (14), et un dispositif (16, 18, 27; 16, 18, 27, 30) de réglage de la raclette d'essuie-glace, à l'aide duquel un bras d'essuie-glace (12; 12') et/ou la raclette d'essuie-glace (14) sont déplaçables en va-et-vient entre deux positions de sorte que la lèvre d'essuyage (22) de la raclette d'essuie-glace (14) s'applique, dans une première position, pendant un déplacement depuis la première position d'extrémité du bras d'essuie-glace vers la seconde position d'extrémité du bras d'essuie-glace, sur la vitre (10), et dans la seconde position pendant l'ensemble du déplacent dans la direction inverse,
**caractérisé en ce**
**qu'**il comporte un dispositif de commande pour commander le dispositif de réglage de la raclette d'essuie-glace auquel peut être envoyé un signal reproduisant la vitesse du véhicule automobile et à l'aide duquel le dispositif de réglage de la raclette d'essuie-glace peut être commandé, de telle sorte que pendant l'essuyage, un écartement de la lèvre d'essuyage par rapport à la vitre ne se produit que lorsque la vitesse est située dans un intervalle prédéterminé.

7. Dispositif d'essuie-glace selon la revendication 6, **caractérisé en ce que** les première et seconde positions d'extrémité du bras d'essuie-glace sont choisies de telle sorte que dans le cas d'un mouvement en avant du véhicule automobile sur au moins la moitié de la trajectoire de déplacement de la raclette d'essuie-glace (14), le déplacement de la lèvre d'essuyage (22) appliquée sur la vitre (10) possède une composante qui s'étend dans la direction du vent de déplacement.

8. Dispositif d'essuie-glace selon la revendication 6 ou 7, **caractérisé en ce que** le dispositif (16, 18, 30) de réglage de la raclette d'essuie-glace est un dispositif d'entraînement en rotation ou de pivotement (16, 18), à l'aide duquel le bras d'essuie-glace (12, 12') et/ou la raclette d'essuie-glace (14) peut tourner ou pivoter autour d'un axe orienté essentiellement parallèlement à l'axe longitudinal de la raclette d'essuie-glace (14) de manière à amener la lèvre d'essuyage (22) en contact avec la vitre (10) et/ou écarter cette lèvre d'essuyage de la vitre (10).

9. Dispositif d'essuie-glace selon l'une des revendications 6 à 8, **caractérisé en ce que** le dispositif (16, 18, 27) de réglage de la raclette d'essuie-glace est agencé de telle sorte que le bras d'essuie-glace (12; 12') peut être abaissé ou soulevé par rapport à la surface de la vitre (10) de manière à placer la lèvre d'essuyage (22) en contact avec la vitre (10) ou l'écarter de la vitre (10).

10. Dispositif d'essuie-glace selon l'une des revendications 6 à 9, **caractérisé en ce**
**que** le dispositif (16, 18, 27) de réglage de la raclette d'essuie-glace comporte un curseur (18) qui est retenu de manière à pouvoir pivoter entre deux positions d'extrémité du rotor parallèlement à la direction de déplacement de la raclette d'essuie-glace (14), et circule sur la vitre (10) ou sur un guide, et
**que** le bras d'essuie-glace (12, 12') et/ou le curseur (18) est agencé de telle sorte que la lèvre d'essuyage (22) s'applique sur la vitre (10) lorsque le curseur prend l'une de ses positions d'extrémité, et ne touche pas la vitre 10 lorsque le curseur est dans son autre position d'extrémité.

11. Dispositif d'essuie-glace selon l'une des revendications 6 à 10, **caractérisé en ce que** le bras d'essuie-glace peut être soulevé ou être abaissé à l'aide d'un mécanisme de couplage qui est relié à un dispositif d'entraînement du dispositif d'essuie-glace et au bras d'essuie-glace.

12. Dispositif d'essuie-glace selon l'une des revendications 6 à 11, **caractérisé en ce que** le bras d'essuie-glace (12, 12') peut pivoter en va-et-vient entre ses positions d'extrémité.
